(19) Europäisches Patentamt
European Patent Office
Office européen des brevets

(11) **EP 1 062 737 B1**

(12) **EUROPÄISCHE PATENTSCHRIFT**

(45) Veröffentlichungstag und Bekanntmachung des Hinweises auf die Patenterteilung:
**03.12.2008 Patentblatt 2008/49**

(51) Int Cl.:
***H04B 3/20*** (2006.01)

(21) Anmeldenummer: **99900005.2**

(22) Anmeldetag: **06.01.1999**

(86) Internationale Anmeldenummer:
**PCT/CH1999/000004**

(87) Internationale Veröffentlichungsnummer:
**WO 1999/037038 (22.07.1999 Gazette 1999/29)**

(54) **VERFAHREN ZUM BEREITSTELLEN VON EINRICHTUNGEN ZUR ECHOUNTERDRÜCKUNG IN KOMMUNIKATIONSVERBINDUNGEN MIT AUTOMATEN**

METHOD FOR SETTING UP ECHO SUPPRESSION DEVICES IN COMMUNICATION LINKS WITH AUTOMATIC MACHINES

PROCEDE POUR ETABLIR DES SYSTEMES DE SUPPRESSION D'ECHO DANS DES LIAISONS DE COMMUNICATION AVEC DES MACHINES AUTOMATIQUES

(84) Benannte Vertragsstaaten:
**CH DE FR GB IT LI**

(30) Priorität: **15.01.1998 CH 7498**

(43) Veröffentlichungstag der Anmeldung:
**27.12.2000 Patentblatt 2000/52**

(73) Patentinhaber: **Siemens Schweiz AG
8047 Zürich (CH)**

(72) Erfinder: **GOLDSTEIN, Peter
CH-8800 Thalwil (CH)**

(74) Vertreter: **Maier, Daniel Oliver et al
Siemens AG
CT IP Com E
Postfach 22 16 34
80506 München (DE)**

(56) Entgegenhaltungen:
**WO-A-97/18640        US-A- 4 349 707
US-A- 5 418 778**

EP 1 062 737 B1

**Beschreibung**

Die vorliegende Erfindung betrifft ein Verfahren nach dem Oberbegriff des Patentanspruchs 1.

Bekanntlich sind in Telekommunikationsnetzen bei der Mensch-Mensch-Kommunikation Echosignale unerwünscht, wenn die Laufzeit des Echos einen gewissen Wert überschreitet, weil sie die an einer Verbindung beteiligten Teilnehmer stören. Die Echosignale entstehen durch unvermeidliche Reflexionen beim 2-Draht-/4-Drahtübergang in der sogenannten Gabelschaltung und/oder durch direkte akustische Kopplung im Teilnehmerendgerät. Zur Reduktion oder vollständigen Elimination dieser Echosignale bei Verbindungen mit relativ langen Laufzeiten sehen die Netzbetreiber in bestimmten Vermittlungsknoten ihres Netzes Echounterdrückungseinrichtungen (Echo Control Device), z.B. Echosperren (Echo Suppressor) oder Echokompensatoren (Echo Canceller) vor, die bei Bedarf aktiviert und in die Verbindung eingefügt werden.

Eine Echo-Kontroll-Logik (Echo Control Logic) im Vermittlungsknoten entscheidet aufgrund verschiedener Kriterien, ob für eine bestimmte Verbindung eine Echounterdrückungseinrichtung eingefügt werden muss. Als Kriterien dienen:

- fest programmierte Leitweglenkungsdaten mit einer Information über die Distanz (und damit über die Laufzeit) zwischen dem Ursprung und dem Ziel einer Verbindung, wobei die Echounterdrückungseinrichtung bei Überschreiten einer bestimmten Distanz eingefügt wird
- die beim Aufbau einer Verbindung dynamisch ermittelte Laufzeit des Nutzsignals
- Informationen bezüglich Endgerät/Anschluss (mit oder ohne Echo-Quelle), d.h. Angaben, die darüber Aufschluss geben, ob in einem Anschluss oder Endgerät ein Echo entsteht oder nicht; und
- von anderen am Aufbau einer Verbindung beteiligten Vermittlungsknoten empfangene Informationen betreffend die Bereitstellung von Echounterdrückungseinrichtungen.

Dabei versucht die Echo-Kontroll-Logik jeweils eine Echounterdrückungseinrichtung zu aktivieren, die sich möglichst nahe bei der Echo-Quelle befindet. Die Bereitstellung von Echounterdrückungseinrichtungen kann gemäss ITU- (International Telecommunication Union) Rec. Q.115(97) erfolgen. In dieser Empfehlung ist beschrieben, wo im Netz solche Einrichtungen vorzugsweise bereitzustellen sind und was für Prozeduren zu deren Aktivierung verwendet werden sollen.

Anders präsentiert sich die Echo-Problematik bei der Kommunikation zwischen Mensch und Automat. Automaten (Intelligent Peripherals) werden z.B. im sogenannten Intelligenten Kommunikationsnetz (Intelligent Network) eingesetzt. Sie gelangen zum Einsatz, wenn ein Teilnehmer einen speziellen Dienst in Anspruch nimmt. Wenn z.B. ein Teilnehmer von einem beliebigen Ort aus bargeldlos eine beliebige Verbindung herstellen will, kann er zunächst eine Dienstverbindung aufbauen und wird so mit einem Automaten verbunden. Der Automat überprüft die Berechtigung etc. des Teilnehmers, nimmt dann seinen Verbindungswunsch entgegen und veranlasst schliesslich die Herstellung der gewünschten Verbindung. Die Gebühren für die Verbindung werden dann der laufenden Telefonrechnung des Teilnehmers belastet.

Der Benutzer kommuniziert von seinem Endgerät aus mittels Sprachsignalen oder Frequenzcodesignalen mit dem Automaten. Im Gegensatz zur normalen Sprachkommunikation zwischen zwei Teilnehmern, wo ein Echo erst ab einer bestimmten Laufzeit stört, ist ein beim Dialog zwischen einem Teilnehmer und einem Automaten auftretendes Echo unabhängig von seiner Laufzeit ein Störfaktor, der im Automat die Auswertung der empfangenen Signale (Spracherkennung bzw. Frequenzcodeerkennung) beeinträchtigt.

Eine Lösung zur Umgehung dieses Problems besteht darin, beim Dialog mit dem Automaten die Eingabe von Sprach- oder Frequenzcode-Informationen nur in bestimmten Zeitfenstern zuzulassen, d.h. der Dialog eines Teilnehmers mit dem Automat erfolgt im Halbduplex-Betrieb. Diese Lösung erlaubt einen einfacheren Aufbau des Automaten, da sie keine Massnahmen zur Echounterdrückung erfordert. Allerdings ist die Dialogführung im Halbduplex-Modus für geübte Benutzer umständlich und zeitraubend, insbesondere wenn die vom Automaten abgegebenen Ansagetexte mehrsprachig sind und/oder wenn die Signallaufzeiten gross sind, wie dies bei langen Verbindungen (z.B. Satellitenverbindungen) der Fall ist. Ausserdem werden die Ressourcen während relativ langen Zeitabschnitten beansprucht, weshalb sich diese Lösung nur für Auskunfts-Automaten, die über spezielle Dienstcodes angewählt werden, oder für Anrufbeantworter eignet.

Bei einer Lösung, wo hingegen ein möglichst normaler, d.h. natürlicher Dialog gewünscht ist, muss für den Automaten eine Echokontroll-Funktionalität vorgesehen werden. Dabei kann der Automat selbst mit einer Echounterdrückungseinrichtung ausgerüstet sein oder es kann ihm in seinem Netzanschlussknoten eine Echounterdrückungseinrichtung fest oder auf Anforderung zugeordnet werden. Die beiden Fälle (Unterdrückungseinrichtung im Automaten angeordnet oder dem Automaten zugeordnet) werden im Folgenden mit "eigene" Echounterdrückung bezeichnet. Diese Lösung ist benutzerfreundlicher und die betreffenden Ressourcen werden nur solange beansprucht, wie sie tatsächlich benötigt werden. Ausserdem ergibt sich im Vergleich zu der erstgenannten Lösung eine geringere Verbindungsaufbauzeit. Diese Vorteile müssen allerdings mit einer komplexeren Ausstattung des Automaten bzw. seines Anschlussknotens erkauft werden. Zudem kann die Echolaufzeit-Kompensation der eigenen Echounterdrückungseinrichtung des Automaten nicht beliebig gross ausgelegt werden, da sonst der Aufwand für die hierfür erforderlichen Komponenten (Speicher, sehr leistungsfähiger Rechner) unverhältnismässig hoch wird.

Der vorliegenden Erfindung liegt daher die Aufgabe zugrunde, ein Verfahren für die Echounterdrückung in Kommunikationsverbindungen zwischen Mensch und Automat in einem Kommunikationsnetz anzugeben, das in jedem Fall wirksam ist und das einen relativ geringen Aufwand erfordert.

Diese Aufgabe wird durch die im Patentanspruchs 1 angegebenen Massnahmen gelöst. Vorteilhafte Ausgestaltungen der Erfindung sowie ein System zur Durchführung des Verfahrens sind in weiteren Ansprüchen angegeben.

Das erfindungsgemässe Verfahren weist den Vorteil auf, dass in Verbindungen mit einem Automaten auftretende Echosignale auch dann unterdrückt werden, wenn die eigene Echounterdrückung des Automaten nicht ausreicht. In einem solchen Fall werden abhängig von der eigenen Echounterdrückung des Automaten und abhängig von der Signallaufzeit der Verbindung zusätzliche Mittel zur Echounterdrückung herangezogen, wenn solche im Netz vorhanden sind. Deshalb kann der Aufwand für die eigene Echounterdrückung der Automaten beschränkt werden. Das Verfahren gewährleistet in jedem Fall eine Echounterdückung, und zwar unabhängig von der geografischen Ausdehnung des Kommunkationsnetzes bzw. des Wertes der darin auftretenden Signallaufzeiten.

Die Erfindung wird nachfolgend anhand einer Zeichnung beispielsweise näher erläutert. Dabei zeigt:

Fig. 1    zwei unterschiedliche Anordnungen von Automaten für die Verbindung zwischen Mensch und Automat in einem Kommunikationsnetz

Fig. 2    Einzelheiten einer über mehrere Vermittlungsstellen/Vermittlungsknoten verlaufenden Verbin- dung zwischen einem Teilnehmer und einem Automaten

Fig. 3    Zustands- und Prozedurdiagramme zum erfindungsgemässen Verfahren

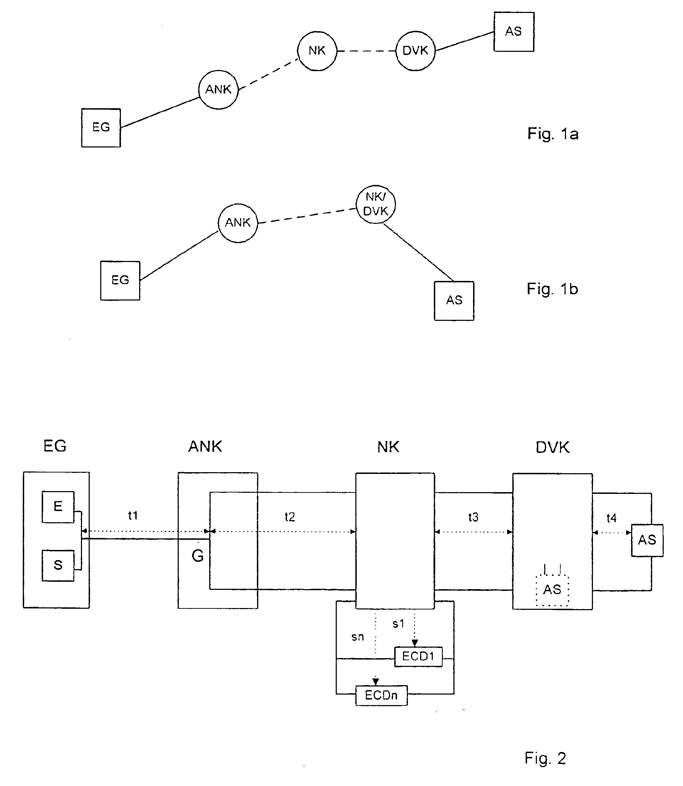

Fig.1a zeigt eine von einem Teilnehmerendgerät EG über verschiedene Vermittlungsknoten ANK, NK und DVK eines Kommunikationsnetzes zu einem Automaten AS verlaufende Kommunikationsverbindung. Die Verbindung umfasst sowohl Nutzsignalkanäle als auch Signalisierkanäle. Das Endgerät EG ist über einen Anschlussknoten ANK an das Netz angeschlossen. Der Automat AS ist über einen Dienstvermittlungsknoten DVK an das Netz angeschlossen. Der Dienstvermittlungsknoten DVK ist ein Knoten, der ausschliesslich zur Abwicklung von automatischen Kommunikationsdiensten dient. Selbstverständlich können auch mehrere Automaten AS an den Dienstvermittlungsknoten DVK angeschlossen sein. Zwischen den Knoten ANK und DVK liegt ein Netzknoten NK, beispielsweise ein Transitknoten. Zwischen den Knoten ANK und DVK können je nach Netzarchitektur weitere Knoten liegen, d.h. je nachdem wie die Verbindung zwischen dem Endgerät EG und dem Automaten AS über das Kommunikationsnetz verläuft.

Fig.1 zeigt eine von einem Teilnehmerendgerät EG über Vermittlungsknoten ANK und NK/DVK eines Kommunikationsnetzes zu einem Automaten AS verlaufende Kommunikationsverbindung. Beim Vermittlungsknoten NK/DVK handelt es sich um einen Knoten, der sowohl als normaler Netzvermittlungsknoten als auch als Dienstvermittlungsknoten ausgebildet ist. Auch hier sind weitere Vermittlungsknoten in der Verbindung zwischen dem Endgerät EG und dem Automaten AS denkbar.

In bestimmten Vermittlungsknoten des Kommunikationsnetzes sind an sich bekannte Echounterdrükkungseinrichtungen vorgesehen, die beim Auftreten unerwünschter Echosignale in eine Verbindung eingefügt werden können. Diese Einrichtungen sind so ausgelegt bzw. im Netz angeordnet, dass sie Echos mit allen im Netz auftretenden Echolaufzeiten unterdrücken können. Für die Bereitstellung von Echounterdrückungseinrichtungen bestehen zwei Möglichkeiten: Die Einrichtungen können bestimmten Leitungen in einem Vermittlungsknoten fest zugeordnet sein. Sie können aber auch in einem mehrere Echounterdrückungseinrichtungen aufweisenden Pool bereitgestellt werden, wie dies in Fig.2 für den Knoten NK mit den Echounterdrückungseinrichtungen ECD1 ... ECDn angedeutet ist. Bei Bedarf, d.h. wenn im Zuge des Aufbaus einer Verbindung eine Echounterdrückung angefordert wird, wird eine fest zugeordnete Echounterdrückungseinrichtung aktiviert bzw. es wird eine der Echounterdrückungseinrichtungen aus dem Pool mit einem Steuersignal s in die betreffende Verbindung eingefügt und aktiviert. Empfehlungen für die Bereitstellung und den Betrieb von Echounterdrückungseinrichtungen in Kommunikationsnetzen gibt die ITU Rec. Q.115(97) "Logic for the Control of Echo Control Devices" und deren Anhang A.

Bei Beanspruchung eines besonderen Dienstes, wie z.B. beim eingangs erwähnten Telefonieren "auf Rechnung" von einem beliebigen Ort aus, wird dem betreffenden Teilnehmer jeweils ein Automat für eine begrenzte Zeit fest zugeschaltet, wobei der Automat für die Abwicklung des angeforderten Dienstes relevante Informationen vom Teilnehmer abfrägt und dann den vom Teilnehmer gewünschten Dienst einleitet. Sobald der Wunsch des Teilnehmers erfüllt ist, d.h. wenn die gewünschte Verbindung zustandegekommen ist, schaltet sich der Automat wieder ab und steht für einen anderen Benutzer zur Verfügung.

Fig. 2 zeigt Einzelheiten der in Fig. 1a gezeigten Verbindung zwischen dem Endgerät EG und dem am Dienstvermittlungsknoten DVK angeschlossenen Automat AS. Der Automat AS könnte auch direkt im Dienstvermittlungsknoten DVK integriert sein. In diesem Fall entfällt die übliche Anschlussleitung zwischen dem Automat AS und dem Vermittlungsknoten DVK. Das Endgerät EG ist ein Fernmeldegerät, wie z.B. ein bekannter Telefonapparat mit einem Sender S (Mikrofon) und einem Empfänger E (Lautsprecher), das über eine Zweidrahtleitung an den Anschlussknoten ANK angeschlossen ist. Die Zweidraht-/Vierdraht-Umsetzung erfolgt mittels einer bekannten Gabelschaltung G. Die Verbindung führt vierdrähtig über die Vermittlungsknoten ANK, NK und den Dienstvermittlungsknoten DVK zum Automaten AS. In Fig. 2 ist angedeutet, dass der Automat AS entweder direkt im Dienstvermittlungsknoten DVK integriert sein kann oder extern am Knoten DVK angeschlossen sein kann. Im letzteren Fall wird die Verbindung vom Knoten DVK zum Automaten AS z.B. mittels DSS1-Protokol hergestellt. Mit t1, t2 und t3 sind die Signallaufzeiten zwischen dem Endgerät EG und dem Vermittlungsknoten ANK bzw. zwischen den an der Verbindung beteiligten Vermittlungsknoten ANK, NK und DVK bezeichnet. t4 ist die Laufzeit zwischen dem Knoten DVK und dem Automaten AS. Ein vom Automat AS abgegebenes Sprachsignal - z.B. ein Ansagetext - trifft also im Fall des externen Automaten AS mit einer Verzögerung von vlz = t1+t2+t3+t4 im Endgerät EG ein. Ein Teil dieses Signals wird in bekannter Weise an der Gabel G reflektiert und gelangt als Echosignal mit einer Verzögerung (Echolaufzeit) tv = 2(t2+t3+t4) zurück zum Automaten AS. Dieses Echosignal ist unerwünscht, da es sich störend auf die Funktionsweise des Automaten AS auswirken kann.

Um das Echosignal unwirksam zu machen, müssen im Automaten AS oder an anderen Stellen im Netz, z.B. im Anschlussknoten des Automaten AS, Massnahmen zur Echounterdrückung vorgesehen werden. Hierzu werden heute sogenannte Echo-Kompensatoren eingesetzt. Das Prinzip solcher Kompensationsanordnungen ist z.B. in "Peter R. Gerke, Digitale Kommunikationsnetze, (Berlin 1991)" oder in den ITU Rec. G.164 und G.165 beschrieben, weshalb hier nicht weiter darauf eingegangen wird. Die Anforderungen an die Rechenleistung und der Aufwand für die notwendigen Speicher in solchen Anordnungen nehmen mit zunehmendem Wert der Echolaufzeit, die zu kompensieren ist, zu. Deshalb wird man in der Praxis Anordnungen einsetzen, die Echosignale nur bis zu einem bestimm ten Wert ihrer Laufzeit unterdrücken bzw. kompensieren. Bei längeren Verbindungen kann dieser Wert deshalb überschritten werden, weshalb die Echosignale dann nicht mehr kompensiert werden und sich wie erwähnt ungünstig auf die Funktionsweise des Automaten auswirken können.

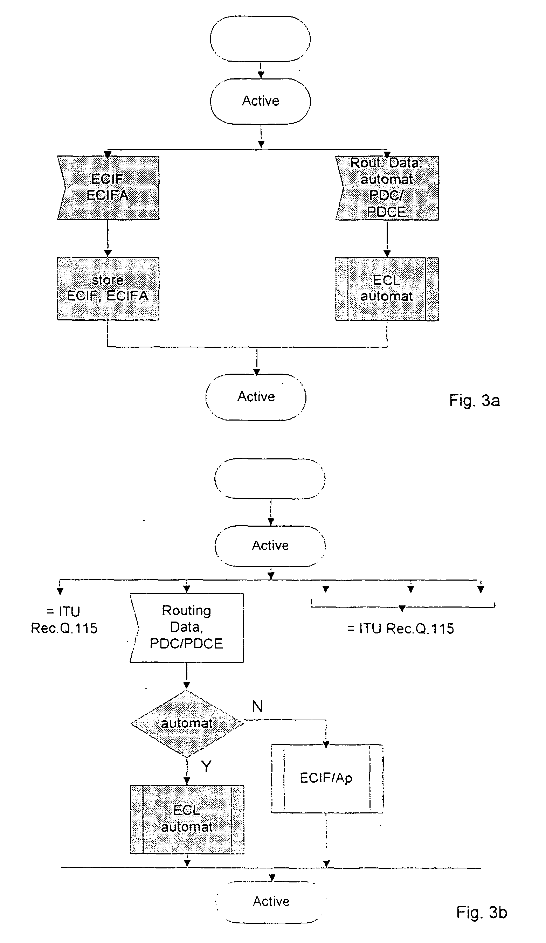

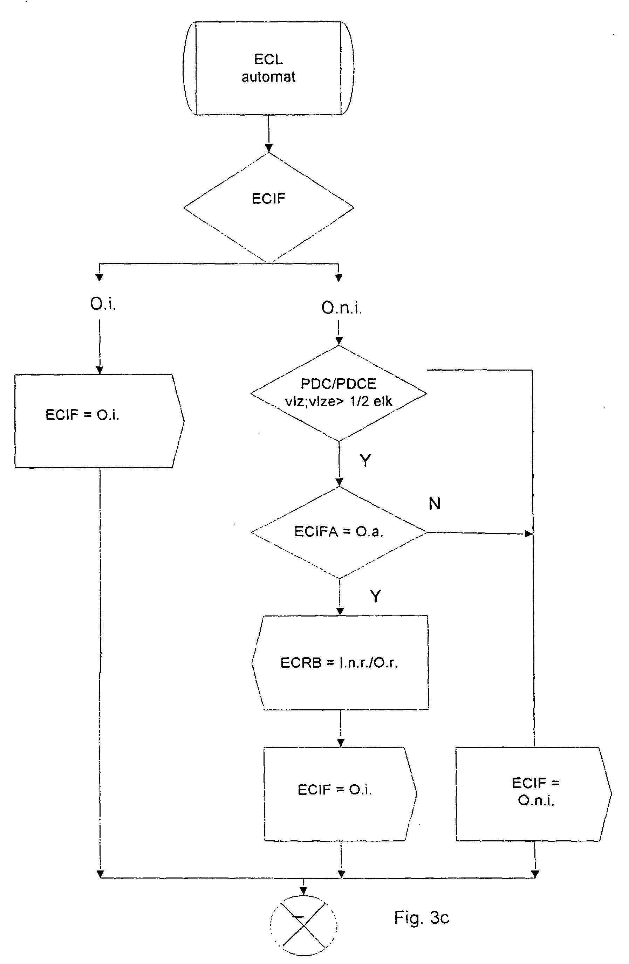

Um eine Echokompensation auch in den Fällen zu gewährleisten, wo die eigene Echo-Kompensation des Automaten nicht ausreicht, wird nun erfindungsgemäss vorgesehen, die Vermittlungsknoten, an die Automaten angeschlossen sind, mit einer Echo-Kontroll-Logik - im Folgenden auch kurz Kontroll-Logik genannt - auszurüsten. Der Kontroll-Logik z.B. des Vermittlungsknotens DVK (Fig. 2) ist der Wert der eigenen Echolaufzeit-Kompensation elk des Automaten AS bekannt. Der Wert elk kann in einen speziellen Datenspeicher des Vermittlungsknotens DVK eingegeben werden, z.B. vom Netzbetreiber. Ferner ist in einem Laufzeitzähler (Propagation Delay Counter) PDC (Fig. 3) des Vermittlungsknotens DVK die erwähnte Verzögerung bzw. Laufzeit vlz eines Signals über die aufgebaute Verbindung von deren Ursprung bis zu dem am Vermittlungsknoten DVK angeschlossenen Automaten AS gespeichert. Beim Aufbau einer Verbindung werden jeweils die Laufzeiten zwischen den an der Verbindung beteiligten Vermittlungsknoten summiert, gespeichert und zum nächsten Vermittlungsknoten gesendet. Damit liegt das Ergebnis vlz nach Beendigung des Verbindungsaufbaus im Laufzeitzähler PDC des Zielvermittlungsknotens, im vorliegenden Fall der Vermittlungsknoten DVK, vor. Dem Knoten DVK ist überdies die Laufzeit t4 zu dem an ihm angeschlossenen Automaten AS bekannt. Die zur Ermittlung der kumulierten Signal-Laufzeit vlz im Zielvermittlungsknoten notwendigen Laufzeiten werden in bekannter Weise mittels ISUP (ISDN User Part) - Signalisierung, einem Signalisierprotokoll des ITU-Signalisierungssystems Nr. 7, zwischen den Vermittlungsknoten übertragen.

Im Beispiel von Fig.2 wird zunächst angenommen, die Signallaufzeit t1 zwischen dem Endgerät EG und der Gabel G sei vernachlässigbar. Der an der Gabel G reflektierte Echoanteil eines vom Automaten AS an das Endgerät EG abgegebenen Signals trifft mit einer Verzögerung tv = 2(t2+t3) bei integriertem Automaten und tv = 2(t2+t3+t4) bei extern angeschlossenem Automat wiederum im Automaten AS ein. Davon ausgehend vergleicht die Kontroll-Logik des Vermittlungsknotens DVK jeweils nach dem Zustandekommen der Verbindung zwischen dem Endgerät EG und dem Automaten AS den im Laufzeitzähler PDC gespeicherten Wert vlz = t1+t2+t3 bzw. vlz = t1+t2+t3+t4 mit dem Wert der eigenen Echolaufzeit-Kompensation elk des Automaten AS. Wenn unter Annahme der vernachlässigbaren Laufzeit t1

$$vlz = t1+t2+t3 \cong t2+t3 > ½ \ elk \ bzw.$$

$$vlz = t1+t2+t3+t4 \cong t2+t3+t4 > ½ \ elk$$

ist, bedeutet das, dass die im Automaten AS bzw. im Anschlussknoten DVK vorgesehene eigene Echolaufzeit-Kompensation zur Kompensation des aufgetretenen Echosignals nicht ausreicht. Deshalb sendet die Kontroll- Logik des Vermittlungsknotens DVK in diesem Fall eine Information in das Kommunikationsnetz, um eine im Netz allenfalls verfügbare Einrichtung zur Echounterdrückung anzufordern.

Gemäss ITU Rec. Q.115(97) werden beim Aufbau einer Verbindung über ein Kommunikationsnetzwerk zwischen den beteiligten Netzen nebst den bekannten Verbindungsinformationen auch für die Echo-Kontroll-Logik relevante Informationen übertragen. Dabei sind folgende Echo-Kontroll-Informationen vorgesehen:

ECIF: Echo Control Information Forward
ECIB: Echo Control Information Backward
ECRF: Echo Control Request Forward
ECRB: Echo Control Request Backward
ECIFA: Echo Control Information Forward, Additional
ECIBA: Echo Control Information Backward, Additional

Die Informationen ECIF, ECIFA, ECIB und ECIBA sind Bestandteil der Verbindungsaufbauinformationen und werden bei jedem Verbindungsaufbau übertragen. ECIF und ECIFA werden in Verbindungsaufbaurichtung (vom rufenden zum gerufenen Teilnehmer), ECIB und ECIBA in der umgekehrten Richtung übertragen. Hingegen sind die Informationen ECRF und ECRB in der Regel dann vorgesehen, wenn in einer bereits bestehenden Verbindung nachträglich eine Echounterdrückung erforderlich wird. Eine solche Konstellation ergibt sich, wenn wie oben beschrieben der Vermittlungsknoten DVK eine im Netz verfügbare Echounterdrückungseinrichtung anfordert, um ein im Automaten störendes Echosignal unwirksam zu machen. Die Kontroll-Logik des Vermittlungsknotens DVK sendet deshalb - in Abhängigkeit von der Information ECIFA, die angibt, ob in einem vorangehenden Vermittlungsknoten eine Echounterdrückungseinrichtung verfügbar ist - eine Information ECRB zum Vermittlungsknoten NK zurück. Wenn das Kommunikationsnetz richtig dimensioniert ist, steht in jedem Fall eine Echounterdrückungseinrichtung zur Verfügung. Die Echounterdrückungseinrichtung wird dann aktiviert und bleibt in der Verbindung, solange die Verbindung besteht.

Die oben getroffene Annahme, t1 sei vernachlässigbar, trifft in der Regel zu. Um jedoch auch in den Fällen, wo diese Annahme nicht zutrifft, auftretende Echosignale sicher zu eliminieren, wird in einer Weiterbildung der Erfindung ein zusätzlicher Laufzeitzähler "Echo" PDCE (Fig. 3) vorgesehen, der im betreffenden Vermittlungsknoten den Wert vlze = t2+t3 bzw. vize = t2+t3+t4 erfasst. Im Gegensatz zur vorher erwähnten kumulierten Laufzeit vlz ist in der kumulierten Laufzeit vize die Laufzeit t1 nicht enthalten. Dies kann durch eine Änderung der ISUP-Signalisierung erreicht werden, indem im wesentlichen im entsprechenden Protokoll ein weiterer Parameter "vize" aufgenommen wird. Alternativ ist auch denkbar, die Laufzeit t1 mittels der ISUP-Signalisierung separat bis zum Zielvermittlungsknoten zu übertragen und erst dort den Wert vlze = vlz - t1 zu bilden. In diesen Fällen entscheidet die Kontroll-Logik des Vermittlungsknotens DVK aufgrund des Vergleichs

$$vlze = t2+t3 > ½ elk \ bzw. \ vlze = t2+t3+t4 > ½ elk$$

ob eine im Netz verfügbare Einrichtung zur Echounterdrückung anzufordern ist. Wenn die Bedingung vlze>1/2 elk erfüllt ist, wird wie oben beschrieben eine Information ECRB abgeschickt.

Die beschriebene Vergleichsoperation in der Echo-Kontroll-Logik eines Vermittlungsknotens, an den Automaten angeschlossen sind, führt zum gleichen Ergebnis, wenn der Automat bzw. sein Anschlussknoten keine eigene Echokompensation aufweist, d.h. wenn elk = 0, da dann vlz > 0 bzw. vlze > 0 ist. Auch in diesem Fall führt das Vergleichsergebnis zur Anforderung einer Echounterdrückungseinrichtung im Netz.

In Fig.3 (bestehend aus den Teilfiguren 3a bis 3c) sind noch Einzelheiten zum Ablauf des Verfahrens in der Echo-Kontroll-Logik eines Vermittlungsknotens anhand eines SDL-Diagramms gezeigt. Die Figur basiert auf der aus der ITU Rec. Q.115(97) bekannten Darstellung mit den dort verwendeten Bezeichnungen und enthält zusätzlich die im Zusammenhang mit der Erfindung relevanten Verfahrensschritte, welche zur Verdeutlichung dunkel unterlegt sind. Der Einfachheit halber werden dabei die gleichen Bezeichnungen wie in der ITU Rec. Q.115(97) verwendet.

Fig. 3a zeigt das Zustandsanreizdiagramm für die Echo-Kontroll-Logik eines Dienstvermittlungsknotens, der aufgrund seiner Anordnung im Netz nicht gemäss ITU Rec. Q.115(97) betrieben wird. Beim Verbindungsaufbau eintreffende Informationen ECIF und ECIFA werden in der Echo-Kontroll-Logik des Knotens gespeichert und bleiben gespeichert, bis die Verbindung wieder abgebaut worden ist. Aufgrund der Routing-Daten stellt die Kontroll-Logik fest, dass am Knoten ein Automat angeschlossen ist. Demzufolge wird eine noch zu beschreibende Prozedur "ECL automat" aktiviert.

Fig. 3b zeigt das Zustandsanreizdiagramm für die Echo-Kontroll-Logik eines Netzknotens, der hingegen gemäss ITU Rec. Q.115(97) betrieben wird. Durch Überprüfung der Routing-Daten ermittelt die Echo-Kontroll-Logik, ob ein Automat angeschlossen ist. Trifft dies zu, wird ebenfalls die Prozedur "ECL automat" aufgerufen. Andernfalls wird die Prozedur ECIF/Ap gemäss ITU Rec. Q.115(97) gestartet. Alle übrigen Elemente des aus der ITU Rec. Q.115(97) bekannten Zustandsanreizdiagramms bleiben unverändert.

Fig. 3c zeigt Einzelheiten zur Prozedur "ECL automat" in der Echo-Kontroll-Logik in einem Vermittlungsknoten. Die Prozedur umfasst folgende Schritte:

- Aufgrund der Information ECIF wird überprüft, ob im vorangehenden Vermittlungsknoten bereits eine Echounterdrückungseinrichtung in die Verbindung eingefügt ist.
- Wenn dies nicht der Fall ist (d.h. ECIF=O.n.i.), vergleicht die Kontroll-Logik die im Laufzeitzähler PDC oder PDCE angegebene Laufzeit vlz bzw. vlze der betreffenden Verbindung mit der dem angeschlossenen Automaten eigenen Echolaufzeit-Kompensation elk.
- Wenn die Bedingung vlz bzw. vlze > ½ elk nicht erfüllt ist, sind keine weiteren Mittel zur Echounterdrückung notwendig.
- Wenn hingegen vlz bzw. vlze > ½ elk ist, wird überprüft, ob eine Information ECIFA = O.a. vorliegt. Gegebenenfalls bedeutet dies, dass in einem der vorangehenden Vermittlungsknoten eine Echounterdrückungseinrichtung verfügbar ist, worauf die Kontroll-Logik die Übertragung einer Information ECRB an diesen Knoten veranlasst.
- Die an den Vermittlungsknoten geschickte Information ECRB bewirkt, dass eine dort verfügbare Echounterdrückungseinrichtung in die Verbindung eingefügt wird.
- Wenn hingegen keine Information ECIFA=O.a. vorliegt, bedeutet dies, dass im Netz keine Echounterdrückungseinrichtung verfügbar ist. Dieser Fall tritt jedoch nur auf, wenn das Netz hinsichtlich der Ressourcen für die Echounterdrückung nicht richtig ausgelegt worden ist.
- Falls zu Beginn der Prozedur festgestellt wird, dass bereits im vorangehenden Vermittlungsknoten eine Echounterdrückungseinrichtung in die Verbindung eingefügt ist (ECIF=O.i., im Pfad links im Diagramm von Fig. 3c), dann entfallen die oben beschriebenen weiteren Schritte der Prozedur.

## Liste der verwendeten Abkürzungen

| | |
|---|---|
| ANK | Anschlussknoten |
| AS | Automat |
| DVK | Dienstvermittlungsknoten |
| E | Empfänger |
| EG | Endgerät |
| G | Gabel |
| NK | Vermittlungsknoten, Netzvermittlungsknoten |
| PDC | Propagation Delay Counter, Laufzeitzähler |
| S | Sender |

## Liste verwendeter Symbole

| | |
|---|---|
| vlz | Signallaufzeit über die aufgebaute Verbindung von deren Ursprung bis zu dem am Vermittlungs- knoten DVK angeschlossenen Automaten AS; kumulierte Signal-Laufzeit. |
| vlze | kumulierte Signal-Laufzeit Echo. |
| elk | Echolaufzeit-Kompensation. |
| t1 | Signal-Laufzeit zwischen dem Endgerät EG und der Echo-Quelle G im Anschlussknoten ANK. |

## Patentansprüche

1. Verfahren zur Echounterdrückung in Verbindungen in einem Kommunikationsnetz, die von einem Endgerät (EG) zu einem Automaten (AS) verlaufen, wobei die an Anschlussknoten (DVK; NK/DVK) gekoppelten Automaten (AS) eine eigene Echounterdrückung aufweisen können und wobei im Kommunikationsnetz weitere Einrichtungen (ECD) zur Echounterdrückung vorgesehen sind, die bei Bedarf angefordert und in aufgebaute Verbindungen eingefügt werden können, um auftretende Echosignale zu unterdrücken,

   **dadurch gekennzeichnet, dass**

   nach dem Aufbau einer Verbindung von einem Endgerät (EG) zu einem Automaten (AS) im Anschlussknoten (DVK; NK/DVK) des Automaten (AS) die Signal-Laufzeit **vlz** zwischen dem Endgerät (EG) und dem Automaten (AS) oder die um die Signal-Laufzeit t1 zwischen dem Endgerät (EG) und dessen Anschlussknoten (ANK) reduzierte Signal-Laufzeit $vize = vlz - t1$ der vom Endgerät (EG) zum Automaten (AS) führenden Verbindung mit dem Wert der Echolaufzeit-Kompensation **elk** der eigenen Echounterdrückungseinrichtung des Automaten (AS) verglichen wird, und dass wenn

$$vlz > ½ \; elk \quad bzw. \quad vlze > ½ \; elk$$

ist, eine Information (ECRB) in das Kommunikationsnetz abgegeben wird, um eine im Netz verfügbare Echounterdrückungseinrichtung (ECD) anzufordern.

**2.** Verfahren nach Anspruch 1,
**dadurch gekennzeichnet, dass**
dass zur Ermittlung der reduzierten Signal-Laufzeit **vlze** der Wert der Laufzeit **t1** zwischen dem Endgerät (EG) und seinem AnschlussKnoten (ANK) separat übertragen und dann im Anschlussknoten (DVK; NK/DVK) des Automaten (AS) von der gesamten Laufzeit **vlz** der Verbindung subtrahiert wird.

**3.** Verfahren nach Anspruch 2,
**dadurch gekennzeichnet, dass**
sowohl die gesamte Laufzeit **vlz** als auch die um die Signal-Laufzeit **t1** reduzierte Laufzeit **vlze** im Anschlussknoten (DVK; NK/DVK) des Automaten (AS) erfasst wird.

**4.** System zur Echounterdrückung in Verbindungen in einem Kommunikationsnetz umfassend

      - wenigstens einen Automaten (AS),
      - wenigstens einen Anschlussknoten und
      - wenigstens ein Endgerät (EG),

wobei

      - Verbindungen von einem Endgerät (EG) zu einem Automaten (AS) verlaufen,
      - die an Anschlussknoten (DVK; NK/DVK) gekoppelten Automaten (AS) eine eigene Echounterdrückung aufweisen können und
      - im Kommunikationsnetz weitere Einrichtungen (ECD) zur Echounterdrückung vorgesehen sind, die bei Bedarf angefordert und in aufgebaute Verbindungen eingefügt werden können, um auftretende Echosignale zu unterdrücken,

**dadurch gekennzeichnet, dass**
in den Anschlussknoten (DVK; NK/DVK) der Automaten (AS) eine Echo-Kontroll-Logik zur Durchführung eines Vergleich zwischen der Signal-Laufzeit **vlz** zwischen dem Endgerät (EG) und dem Automaten (AS) bzw. die um die Signal-Laufzeit t1 zwischen dem Endgerät (EG) und dessen Anschlussknoten (ANK) reduzierte Signal-Laufzeit **vlze** = **vlz - t1** und der Echolaufzeit-Kompensation **elk** der eigenen Echounterdrückung des Automaten (AS) vorgesehen ist, wobei durch die Echo-Kontroll-Logik bei Erfüllung der Bedingung **vlz >** ½ **elk** bzw. **vlze** > ½ **elk** eine im Netz verfügbare Echounterdrükkungseinrichtung (ECD) angefordert wird.

**5.** System nach Anspruch 4,
**dadurch gekennzeichnet, dass**
in den Anschlussknoten (DVK; NK/DVK) der Automaten (AS) ein Laufzeitzähler (PDC) zur Erfassung der Signal-Laufzeit **vlz** und/oder ein weiterer Laufzeitzähler (PDCE) zur Erfassung der Signal-Laufzeit **vize** vorgesehen ist, wobei die zur Ermittlung der beiden Signallaufzeiten **vlz** bzw. **vlze** erforderlichen Laufzeitwerte mit einem Signalisierprotokoll an die an der Verbindung beteiligten Vermittlungsknoten übertragbar sind.

**Claims**

**1.** Method for suppressing echoes in connections in a communications network, which run from a terminal device (EG) to an intelligent peripheral (AS), the intelligent peripherals (AS) coupled to the access nodes (DVK; NK/DVK) being able to have their own echo control and further echo control devices (ECD) being provided in the communication network which can be called upon when required and inserted into established connections in order to suppress the occurrence of echo signals,

**characterised in that**

after a connection is set up from a terminal device (EG) to an intelligent peripheral (AS) in the access node (DVK; NK/DVK) of the intelligent peripheral (AS), the signal propagation time **vlz** between the terminal device (EG) and the intelligent peripheral (AS), or the signal propagation time **vlze = vlz - t1** reduced by the signal propagation time **t1** between the terminal device (EG) and its access node (ANK) of the connection leading from the terminal device (EG) to the intelligent peripheral (AS), is compared with the value of the echo propagation time compensation **elk** of the intelligent peripheral's (AS) own echo control device and that when

$$\texttt{vlz > ½ elk } or \texttt{ vlze > ½ elk,}$$

information (ERCB) is output in the communication network to request an echo control device (ECD) available in the network.

2. Method according to claim 1,
   **characterised in that**
   to determine the reduced signal propagation time **vlze,** the value of the propagation time **t1** between the terminal device (EG) and its access node (ANK) is transmitted separately and then subtracted from the whole propagation time **vlz** of the connection in the access node (DVK; NK/DVK) of the intelligent peripheral (AS).

3. Method according to claim 2,
   **characterised in that**
   both the whole propagation time **vlz** and the propagation time **vlze** reduced by the signal propagation time **t1** is detected in the access node (DVK; NK; DVK) of the intelligent peripheral (AS).

4. System for suppressing echoes in connections in a communications network comprising

   - at least one intelligent peripheral (AS)
   - at least one access node and
   - at least one terminal device (EG)

   wherein

   - connections run from a terminal device (EG) to an intelligent peripheral (AS)
   - the intelligent peripherals coupled to access nodes (DVK; NVK) can have their own echo control and
   - in the communication network further echo control devices (ECD) are provided which can be called upon if required and inserted into established connections to suppress the occurrence of echo signals

   **characterised in that**
   an echo control logic is provided in the access nodes (DVK; NK/DVK) of the intelligent peripheral (AS) to carry out a comparison between the signal propagation time **vlz** between the terminal device (EG) and the intelligent peripheral (AS) or the signal propagation time **vlze = vlz - t1** reduced by the signal propagation time **t1** between the terminal device (EG) and its access node (ANK) and the echo propagation time compensation **elk** of the intelligent peripheral's own echo control, an echo control device (ECD) available in the network being requested by the echo control logic when the condition **vlz > ½ elk** or **vlze > ½** elk is fulfilled.

5. System according to claim 4,
   **characterised in that**
   a propagation delay counter (PDC) is provided in the access nodes (DVK; NK/DVK) of the intelligent peripheral (AS) to detect the signal propagation time **vlz** and/or a further propagation delay counter (PDCE) is provided to detect the signal propagation time **vlze,** the required propagation time values for detecting both signal times **vlz** and **vlze** being able to be transmitted with a signalling protocol to the switching node which forms part of the connection.

**Revendications**

1. Procédé de suppression d'écho dans des liaisons d'un réseau de communication, qui vont d'un terminal ( EG ) à une machine ( AS ) automatique, dans lequel les machines ( AS ) automatiques couplées au noeud ( DVK ; NK/DVK ) de connexion peuvent avoir une suppression d'écho propre et dans lequel il est prévu dans le réseau de communication d'autres dispositifs ( ECD ) de suppression d'écho qui en cas de besoin peuvent être demandés et insérés dans des liaisons établies pour supprimer des signaux d'écho qui se produisent,
   **caractérisé en ce que**
   après l'établissement d'une liaison allant d'un terminal ( EG ) à une machine ( AS ) automatique, on compare dans le noeud ( DVK ; NK/DVK ) de connexion de la machine ( AS ) automatique la durée **vlz** de propagation du signal entre le terminal ( EG ) et la machine ( AS ) automatique ou la durée **vlze = vlz - t1** de propagation du signal réduite de la durée **t1** de propagation du signal entre le terminal ( EG ) et son noeud ( ANK ) de connexion de la liaison allant du terminal ( EG ) à la machine ( AS ) automatique à la valeur de la compensation **elk** de temps de propagation de l'écho du dispositif de suppression d'écho propre de la machine ( AS ) automatique et **en ce que**, lorsque l'on a

$$\text{vlz} > \tfrac{1}{2}\,\text{elk} \quad \text{et respectivement} \quad \text{vlze} > \tfrac{1}{2}\,\text{elk}$$

   une information est émise dans le réseau de communication pour réclamer un dispositif ( ECD ) de suppression d'écho disponible dans le réseau.

2. Procédé suivant la revendication 1,
   **caractérisé en ce que**
   pour la détermination de la durée **vlze** de propagation du signal réduite, on transmet séparément la valeur de la durée **t1** de propagation entre le terminal ( EG ) et son noeud ( ANK ) de connexion et on la soustrait ensuite dans le noeud ( DVK ; NK/DVK ) de connexion de la machine ( AS ) automatique de la durée **vlz** de propagation totale de la liaison.

3. Procédé suivant la revendication 2,
   **caractérisé en ce que**
   l'on relève tant la durée **vlz** de propagation totale que la durée **vlze** de propagation réduite de la durée **t1** de propagation du signal dans le noeud ( DVK ; NK/DVK ) de connexion de la machine ( AS ) automatique.

4. Système de suppression d'écho dans des liaisons d'un réseau de communication comprenant

   - au moins une machine ( AS ) automatique,
   - au moins un noeud de connexion et
   - au moins un terminal ( EG ),

   dans lequel

   - des liaisons vont d'un terminal ( EG ) à une machine ( AS ) automatique,
   - les machines ( AS ) automatiques couplées aux noeuds ( DVK ; NK/DVK ) de connexion peuvent avoir leur propre suppression d'écho et
   - il est prévu dans le réseau de communication d'autres dispositifs ( ECD ) de suppression d'écho qui peuvent être réclamés en cas de besoin et insérés dans des liaisons établies pour supprimer des signaux d'écho qui se produisent

   **caractérisé en ce que**
   il est prévu dans les noeuds ( DVK ; NK/DVK ) de connexion des machines ( AS ) automatiques une logique de contrôle d'écho pour effectuer une comparaison entre la durée **vlz** de propagation du signal entre le terminal ( EG ) et la machine ( AS ) automatique ou la durée **vlze = vlz - t1** de propagation du signal réduite de la durée **t1** de propagation du signal entre le terminal ( EG ) et son noeud ( ANK ) de connexion et la compensation **elk** du temps de propagation de l'écho de la suppression d'écho propre de la machine ( AS ) automatique, un dispositif ( ECD ) de suppression d'écho disponible dans le réseau étant réclamé par la logique de contrôle d'écho si la condition **vlz > ½ elk** et respectivement **vlze > ½ elk** est satisfaite.

**5.** Procédé suivant la revendication 4,
**caractérisé en ce que**
dans les noeuds ( DVK ; NK/DVK ) de connexion des machines ( AS ) automatiques est prévu un compteur ( PDC ) de durée de propagation pour relever la durée **vlz** de propagation du signal et/ou un autre compteur ( PDCE ) de durée de propagation pour relever la durée **vlze** de propagation du signal, les valeurs de durée de propagation nécessaires pour la détermination des deux durées **vlz** et respectivement **vlze** de propagation du signal pouvant être transmises par un programme de signalisation aux noeuds de commutation participant à la liaison.

Fig. 1a

Fig. 1b

Fig. 2

Active

ECIF
ECIFA

Rout. Data:
automat
PDC/
PDCE

store
ECIF, ECIFA

ECL
automat

Active

Fig. 3a

Active

= ITU
Rec.Q.115

Routing
Data,
PDC/PDCE

= ITU Rec.Q.115

automat

N

Y

ECIF/Ap

ECL
automat

Active

Fig. 3b

Fig. 3c